# EUROPÄISCHE PATENTSCHRIFT

(11) **EP 2 921 358 B1**
(45) Veröffentlichungstag und Bekanntmachung des Hinweises auf die Patenterteilung: **01.05.2019**
(21) Anmeldenummer: 14161069.1
(22) Anmeldetag: 21.03.2014
(51) Int. Cl.: B60T 7/10, B60T 13/74, F16D 55/08, F16D 65/18, H01R 13/00, H02K 5/22

(54) **Aktuatoranordnung**
Actuator assembly
Système d'actionneurs

(43) Veröffentlichungstag der Anmeldung: 23.09.2015
(73) Patentinhaber: IMS Gear SE & Co. KGaA, 78166 Donaueschingen (DE)
(72) Erfinder: Ambs, Marcel, 78120 Furtwangen (DE); Fechler, Jens, 78183 Hüfingen (DE); Böttger, Florian, 78588 Denkingen (DE)
(74) Vertreter: Westphal, Mussgnug & Partner Patentanwälte mbB

(56) Entgegenhaltungen:
- WO-A1-2011/076299
- WO-A1-2011/076366
- WO-A2-2005/001303
- DE-A1-102008 030 535
- DE-A1-102010 032 053
- DE-A1-102012 110 791
- DE-U1-202008 002 796
- US-A- 5 777 410
- US-A1- 2014 034 430

## Beschreibung

Die Erfindung betrifft eine Aktuatoranordnung für eine Bremse, insbesondere eine elektrische Parkbremse und/oder elektromechanische Betriebsbremse, wie diese insbesondere in Kraftfahrzeugen Verwendung findet, gemäß den Merkmalen des Oberbegriffs des Anspruchs 1.

Eine solche Aktuatoranordnung ist beispielsweise aus
DE 10 2008 030 535 A1 bekannt. Die Aktuatoranordnung ist modulartig aufgebaut und verfügt über eine sattelartige Bremseinheit. In dem Gehäuse dieser Bremseinheit sind in an sich bekannter Weise zwei gegenüberliegende Bremsbeläge angeordnet, von denen zumindest einer über einen Bremskolben auf einen anderen zu verlagerbar ist. Zur Verlagerung des Bremskolbens dient die Aktuatoranordnung. Diese verfügt über einen Elektromotor und eine vom Elektromotor angetriebene, als Untersetzungsgetriebe ausgebildete Getriebeeinheit. Ausgangsseitig ist die Getriebeeinheit mit einer Bremsbelagverstelleinheit gekoppelt, um eine im Inneren der Bremsbelagverstelleinheit befindlichen Kolben axial zu bewegen. Die Verschiebung dieses Kolbens führt dann schließlich zur Verlagerung des Bremsbelags. Die Aktuatoranordnung ist dabei über geeignete Verbindungsschrauben an das Gehäuse der Bremseinheit festgeschraubt. Die Getriebeeinheit weist einen Riemen auf, der einerseits um das Abtriebsritzel des Elektromotors kraftübertragend herumgeführt ist und ferner an einem Antriebszahnrad eines Planetengetriebes angreift. Ausgangsseitig ist das Planetengetriebe dazu vorgesehen, drehfest mit einer in der Bremsbelagverstelleinheit befindlichen Drehspindel in Drehung zu versetzen, welche stirnseitig den erwähnten Kolben bewegt.

Bei dieser bekannten Bremseinheit sind das Gehäuse der Bremseinheit, die elektromotorische Antriebseinheit mit dem Elektromotor, die Getriebeeinheit und die Steuereinheit bereits als separate Module ausgebildet. Je nach Bedarf lässt sich deshalb eines der Module gegen ein entsprechend anders ausgelegtes Modul ersetzen, sofern die mechanischen Schnittstellen der Einzelmodule untereinander beibehalten werden. Dennoch ist diese bekannte Bremseinheit hinsichtlich eines einfachen Aufbaus, einer kostengünstigen Herstellung und ihrer Anpassungsmöglichkeiten an unterschiedliche Anforderungen verbesserbar.

Hier setzt die vorliegende Erfindung an.

Die Erfindung hat das Ziel, die bekannte Aktuatoranordnung für eine Bremse, insbesondere eine elektrische Parkbremse und/oder elektromechanische Betriebsbremse bei Kraftfahrzeugen, so weiterzubilden, dass diese noch einfacher aufgebaut und kostengünstiger herstellbar ist. Insbesondere sollen anwenderspezifische Bedürfnisse hinsichtlich Schnittstellen der Aktuatoranordnung voneinander unabhängig und applikationsspezifisch in besonders einfacher Weise angepasst werden können.

Dieses Ziel wird durch eine Aktuatoranordnung mit den Merkmalen des Anspruchs 1 gelöst.

Weiterbildungen einer solchen Aktuatoranordnung sind in den Unteransprüchen angegeben.

Die erfindungsgemäße Aktuatoreinrichtung für eine elektrische Parkbremse mit einer von der Aktuaroranordnung antreibbaren Bremsbelagverstelleinheit, weist eine modular aufgebaute Aktuatoranordnung mit einem Elektromotor, einer in einem Gehäuse sitzenden Getriebeeinheit, die mit dem Elektromotor gekoppelt ist und ausgangsseitig mit der Bremsbelagverstelleinheit in Wirkverbindung steht, mit Befestigungsmitteln zum Befestigen der Aktuatoranordnung am Bremssattel oder der Bremsbelagverstelleinheit und mit einer Steckeraufnahme für einen Anschlussstecker zur Übermittlung elektrischer Signale an den Elektromotor auf.

Erfindungswesentlich ist dabei, dass das Gehäuse einen angeformten oder angefügten Motortubus, in den der Elektromotor aufgenommen ist, und eine Motorkappe, an der die Steckeraufnahme für einen Anschlussstecker zur Übermittlung elektrischer Signale an den Elektromotor angeordnet, insbesondere einstückig angeformt ist, aufweist.

Auf diese Weise ist es möglich, mit einem weitgehend auf identischen Bauteilen basierenden Gehäuse durch eine bloße Anpassung der Motorkappe an die Erfordernisse der jeweiligen Anwendung, insbesondere eine Anpassung an die Art und Lage der Steckverbindung, mit der die Aktuatoranordnung mit elektrischen Signalen und/oder Betriebsstrom versorgt wird, zu erreichen.

Ein besonders bevorzugtes Material für den Motortubus und/oder die Motorkappe ist dabei Kunststoff.

Sofern die Steuersignale einer motorseitigen Verarbeitung bedürfen, kann vorteilhafterweise zumindest ein Teil der Steuerelektronik für den Elektromotor an der Motorkappe, insbesondere auf deren dem Elektromotor zugewandter Seite, angeordnet werden. Ganz besonders vorteilhaft ist es dabei, wenn an der Motorkappe alle elektronischen Komponenten des Elektromotors angeordnet sind, so dass erst die Verbindung der Motorkappe mit dem Motorgehäuse den Elektromotor zu einer funktionsfähigen Einheit macht.

Um auch in Fällen, in denen ein den Querschnitt des Motortubus deutlich unterschreitender Elektromotor verwendet wird eine wohldefinierte und stabile Position des Elektromotors zu gewährleisten und um sicherzustellen, dass die elektrischen Kontakte des Elektromotors, über die die Steuersignale an diesen weitergeleitet werden in einer definierten Position relativ zur Motorkappe zu halten ist es bevorzugt, wenn der Elektromotor ein Motorgehäuse aufweist und dass die Motorkappe und das Motorgehäuse feststehend aneinander gefügt sind, insbesondere als Steckverbindung.

Eine vorteilhafte Weiterbildung der Erfindung besteht darin, die Befestigungsmittel zum Befestigen der Aktuatoranordnung am Bremssattel oder der Bremsbelagverstelleinheit als separates Teil, insbesondere Austauschteil, auszubilden und mit Befestigungsöffnungen zu versehen, wobei diese Befestigungsmittel drehfest an der Aktuatoranordnung festgelegt sind. Um den unterschiedlichen Befestigungsbedingungen der verschiedenen Kunden gerecht zu werden, ist es demnach lediglich notwendig, unterschiedliche separate Teile, in die die Befestigungsöffnungen kundenspezifisch eingearbeitet sind, vorzusehen. Die übrige Aktuatoranordnung braucht hingegen nicht verändert zu werden.

In einer Weiterbildung der Erfindung sind diese Befestigungsmittel entweder als Einschiebeteil nach Art einer Nut-Feder-Verbindung gestaltet oder als Aufsteckteil ausgebildet. Vorzugsweise sind diese Befestigungsmittel als Stanzteil, insbesondere als metallisches Stanzteil hergestellt.

Wenngleich es grundsätzlich möglich ist, dass die Getriebeeinheit beliebig gestaltet ist und unterschiedlichste Getriebeelemente aufweisen kann, bietet es sich an und liegt im Rahmen der vorliegenden Erfindung, dass die einzelnen Getriebeelemente eine von der Motorwelle direkt angetriebenes zweistufiges Schraubradgetriebe aufweisen, welches abtriebsseitig eine Welle aufweist, die z.B. drehfest mit einer in der Bremsbelagverstelleinheit befindliche Drehspindel antreibt.

In einer Weiterbildung der Erfindung ist die Getriebeeinheit mit ihren Getriebeelementen sowie deren Halteelementen im Inneren eines Getriebeträgertopfes, welcher ein Gehäuseteil des Gehäuses bildet, aufgenommen. An dem Boden dieses Getriebeträgertopfes sind zwei Ausnehmungen vorgesehen, durch welche die Motorwelle des Elektromotors einerseits und andererseits eine Ausgangswelle der Getriebeeinheit ragt. Auf der Motorwelle des Elektromotors kann dabei ein Ritzel angeordnet sein, das durch die erwähnte Ausnehmung ebenfalls geführt ist. Zweckmäßigerweise wird dieser Getriebeträgertopf auf der den beiden Ausnehmungen gegenüberliegenden Seite von einem Gehäusedeckel verschlossen.

In einer anderen Ausbildung der Erfindung ist vorgesehen, dass nicht nur der Motortubus, der den Elektromotor aufnimmt, und die Motorkappe aus Kunststoff bestehen, sondern zusätzlich auch der Getriebeträgertopf.

Die Erfindung sieht des Weiteren bevorzugt vor, dass die oben erwähnten Befestigungsmittel als metallisches Stanzteil beziehungsweise metallisches Stanzbiegeteil ausgebildet sind, alternativ kann das Befestigungsmittel aber auch als Kunststoffteil hergestellt werden. Ein solches Befestigungsmittel kann beispielsweise aus einem Blech hergestellt sein. Dabei können die Befestigungsmittel entweder als Einschiebeteil nach Art einer Nut-Feder-Verbindung an den Getriebeträgertopf angreifen und dort verdrehfest festgelegt sein oder aber als Aufsteckteil, wobei die Befestigungsmittel dann zweckmäßigerweise als Befestigungskorb ausgebildet sind.

Bei der Ausbildung der Befestigungsmittel als Einschiebeteil, ist dieses in einfacher Art und Weise spangenartig oder mindestens annähernd U-förmig gestaltet und kann in eine entsprechend umlaufende Nut, die in die Umfangswandung des Getriebeträgertopfes eingearbeitet ist, eingesetzt werden. Dort kann das Einschiebeteil durch seine Form, zusätzliche Drehmomentaufnahmen sowie bei Bedarf auch zusätzlich über Stifte und/oder Bolzen drehfest fixiert sein.

In einer zusätzlichen Ausführung der Erfindung kann vorgesehen werden, dass die Befestigungsmittel an Rastnasen des Getriebeträgertopfes und/oder des Gehäusedeckels der Aktuatoranordnung festgelegt werden.

Bei dem erwähnten modulartigen Aufbau der gesamten Aktuatoranordnung mit Getriebeträgertopf, Gehäusedeckel, Befestigungsmittel und Motorkappe hat es sich als besonders günstig erwiesen, die Getriebeträgertöpfe und die zugehörenden Gehäusedeckel in unterschiedlichen Größen vorzuhalten, die durch den Achsabstand der Motorwelle zur Ausgangswelle der Getriebeeinheit bedingt sind. Bei all diesen auch unterschiedlich großen Teilen wird erfindungsgemäß jedoch darauf geachtet, dass die Schnittstellen für die erwähnten Befestigungsmittel, also das zur Befestigung vorgesehene Einschiebeteil oder das Aufsteckteil einerseits und das Umgehäuse für den Motor immer identisch ausgebildet sind. Hierdurch wird ein hohes Maß an Flexibilität erreicht, ohne dabei komplett anders gestaltete Gehäuseteile vorhalten zu müssen. Demzufolge können mit dem erfindungsgemäß vorgeschlagenen, modularen Aufbau der Aktuatoreinrichtung kundenspezifische Schnittstellen, wie Steckeranschluss, Anschraubaugen zur Befestigung der Aktuatoranordnung, Achsabstand zwischen Motor- und Abtriebswelle, an der Aktuatoreinrichtung einer elektrischen Feststellbremse, beziehungsweise einer elektromechanischen Betriebsbremse voneinander völlig unabhängig und applikationsspezifisch angepasst werden. Vorteilhafterweise müssen dank der Erfindung nicht mehr komplette neue Gehäuse konzipiert und bereitgestellt werden, insbesondere dann nicht, wenn lediglich eine einzige der beschriebenen Kundenschnittstellen spezifisch angepasst werden muss. Die erfindungsgemäße Aktuatoreinrichtung hat den entscheidenden Vorteil, dass jede der erwähnten Schnittstellen, also Steckeranschluss, Anschraubaugen und Achsabstand von Motor- zur Abtriebswelle, auf einem separaten Gehäuseteil positioniert wird. Sämtliche Gehäuseteile können durch standardisierte Schnittstellen an der Aktuatoreinrichtung miteinander verbunden werden.

Die erfindungsgemäße Aktuatoreinrichtung wird nachfolgend in Zusammenhang mit Ausführungsbeispielen und insgesamt zehn Figuren näher erläutert. Es zeigen:
- Figur 1a: eine Schnittzeichnung Ansicht eines Ausführungsbeispiels einer an einer Bremsbelagverstelleinheit angeordneten Aktuatoranordnung mit im Gehäuse sitzender Motorbaugruppe und Getriebeeinheit,
- Figur 1b: eine perspektivische Ansicht des Ausführungsbeispiels aus Figur 1a,
- Figur 2: die in Figur 1b gezeigte Aktuatoranordnung in perspektivischer Ansicht mit halb eingesetzter Motorbaugruppe, wobei die Bremsbelagverstelleinheit weggelassen ist,
- Figur 3: eine ähnliche Ansicht wie Figur 2, jedoch mit noch nicht eingesetzter Motorbaugruppe,
- Figur 4: ein Gehäuseteil der Aktuatoranordnung gemäß Figur 1 bis Figur 3 in Form eines Getriebeträgertopfes, welcher eine Vielzahl von Getriebeelementen aufnimmt,
- Figur 5: die Komponenten einer Motorbaugruppe,
- Figur 6: die aus den Komponenten gemäß Figur 5 zusammengefügte Motorbaugruppe,
- Figur 7: ein zweites Ausführungsbeispiel einer Aktuatoranordnung, bei dem die Befestigungsmittel als Aufsteckteil ausgebildet sind in Explosionsdarstellung,
- Figur 8: eine ähnliche Ansicht wie in Figur 7, allerdings im zusammengebauten Zustand,
- Figur 9: verschiedene Ansichten von Getriebeträgertöpfen mit unterschiedlichem Achsabstand zwischen Motorwelle und Abtriebswelle der Getriebeeinheit und
- Figur 10: entsprechende zu den in Figur 9 dargestellten Getriebeträgertöpfen passende Gehäusedeckel,
- Figur 11: eine Aktuatoranordnung mit einer ersten Orientierung der Steckeraufnahme,
- Figur 12: eine Aktuatoranordnung mit einer zweiten Orientierung der Steckeraufnahme, und
- Figur 13: eine Aktuatoranordnung mit einer dritten Orientierung der Steckeraufnahme.

In den nachfolgenden Figuren bezeichnen, sofern nicht anders angegeben, gleiche Bezugszeichen gleiche Teile mit gleicher Bedeutung.

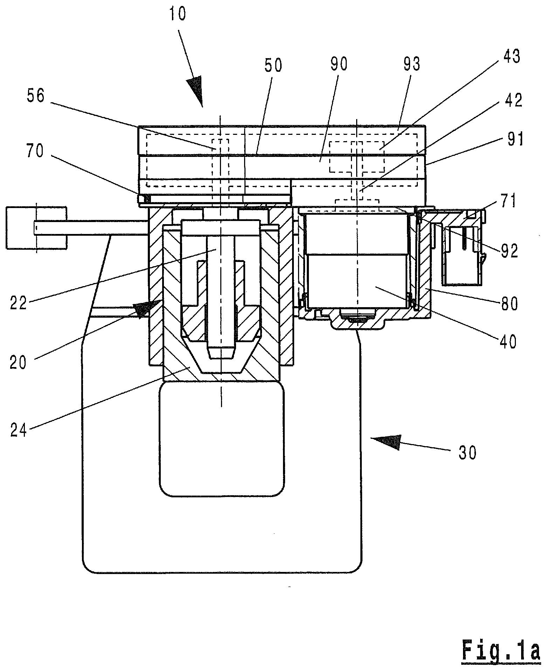

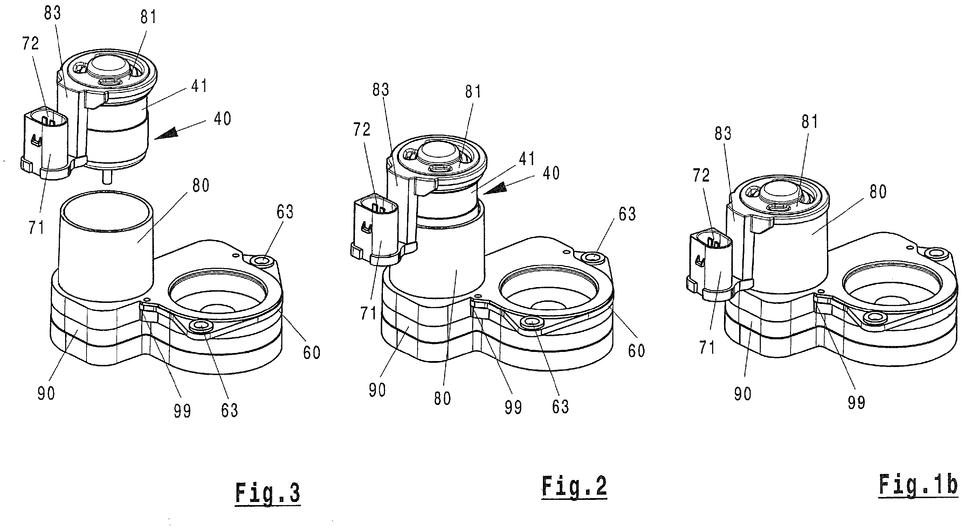

In Figur 1a ist in Schnittdarstellung und in Figur 1b in perspektivischer Darstellung eine Aktuatoranordnung 10 gezeigt, welche über noch zu erläuternde Befestigungsmittel 60 an eine Bremsbelagverstelleinheit 20 festgelegt ist. Diese Bremsbelagverstelleinheit 20 verfügt intern über eine Drehspindel 22, welche von der Aktuatoranordnung 10 in Drehung versetzbar ist, um einen in der Bremsbelagverstelleinheit 20 befindlichen Kolben 24 zur Verstellung von Bremsbelägen eines Bremssattels 30, der ebenfalls nur schematisch in Figur 1 angedeutet ist, aufeinander zu zu bewegen. Die Bremsbelagverstelleinheit 20 und der Bremssattel 30 sind an sich bekannt, sodass auf diese Bestandteile der elektrischen Bremse nicht näher eingegangen wird.

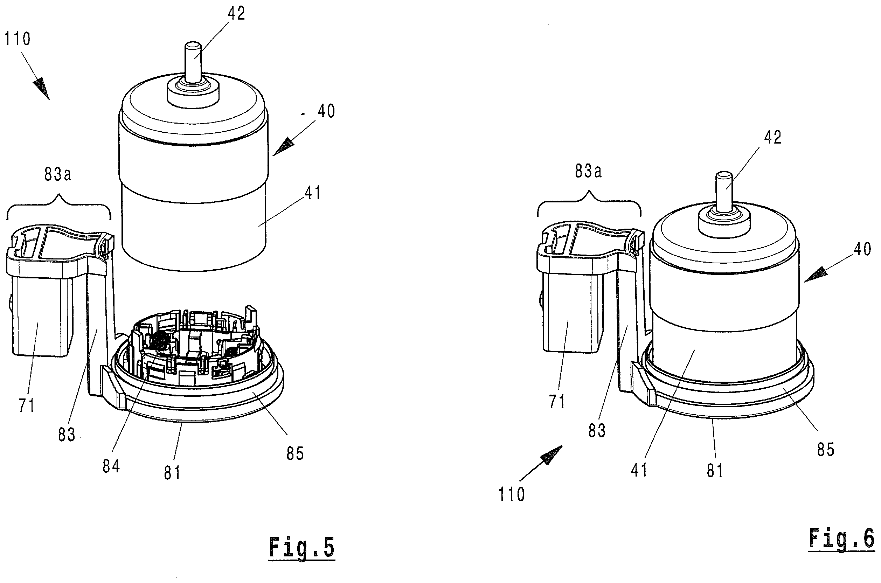

Die Aktuatoranordnung 10 verfügt über eine elektromotorische Antriebseinheit mit einem Elektromotor 40, der sich aber in der Darstellung gemäß Figur 1b im Inneren des Gehäuses 90 der Aktuatoranordnung 10 ist und nicht sichtbar ist. Wie man aber z.B. an Hand der Figur 5 erkennt weist der Elektromotor 40 üblicherweise bereits ein eigenes, z.B. metallisches, zylindrisches Gehäuse auf, an welchem einseitig eine Motorwelle herausragt. Diese Motorwelle ist dabei in der Regel mit einem Motorritzel drehfest verbunden.

Wie man in Figur 1a und b gut erkennt, sitzt der komplette Elektromotor 40 mit seinem eigenen Gehäuse in einem Motortubus 80, also in einem rohr- oder hohlzylinderförmigen Teilabschnitt (wenn der Motortubus 80 an ein anderes Gehäuseteil angeformt ist) oder Bestandteil (wenn der Motortubus 80 eine Komponente eines mehrstückigen Gehäuses ist) des Gehäuses 90. Dieser Motortubus 80 besteht vorzugsweise aus Kunststoff und ist so gestaltet, dass der komplette Elektromotor 40 darin Platz findet. Aus dem einen offenen Ende des Motortubus 80 ragt die Motorwelle 42 mit dem Motorritzel 43 heraus. Am anderen Ende des Motortubus 80 ist eine vorzugsweise ebenfalls aus Kunststoff hergestellte Motorkappe 81 angefügt, die den Motortubus 80 verschließt.

Einstückig über eine Kontaktführung 83 mit der Motorkappe 81 verbunden ist eine Steckeraufnahme 71. Innerhalb der Steckeraufnahme 71 befinden sich Steckkontakte 72, welche elektrisch mit dem Elektromotor 40 in Verbindung stehen, sodass ein in die Steckeraufnahme 71 eingesteckter elektrischer Steckverbinder, der mit einer entsprechenden elektronischen Ansteuereinheit in Verbindung steht, den Elektromotor mit elektrischen Signalen beaufschlagen kann, insbesondere aber auch mit einer geeigneten Stromversorgung versorgt.

Durch Variation der Form der Steckeraufnahme 71, ihrer Orientierung auf der Kontaktführung 83 und des geometrischen Verlaufs der Kontaktführung können die Art und die Positionierung der zu verwendenden Steckverbindung leicht an die jeweiligen Erfordernisse angepasst werden, wobei durch diese Anpassung lediglich die Ausgestaltung der zu verwendenden Motorkappe 81 beeinflusst wird, während der Rest der Aktuatoranordnung im Wesentlichen unverändert bleiben kann.

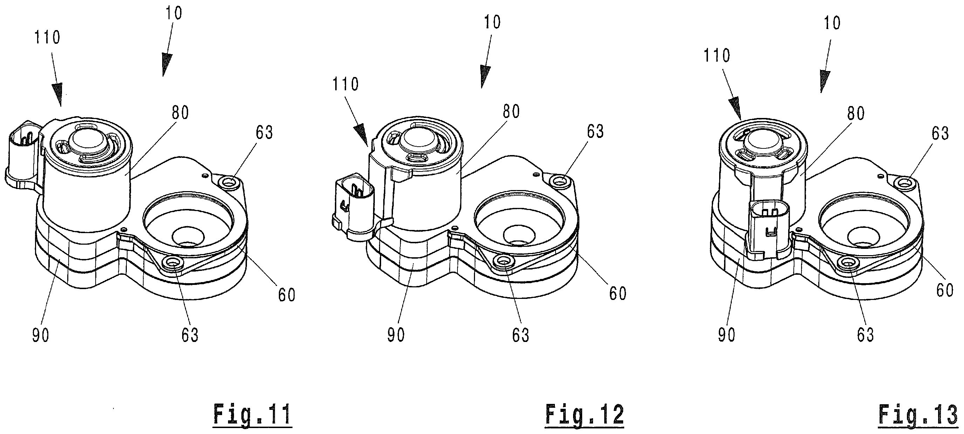

Eine kleine Auswahl von Variationsmöglichkeiten, die auf diese Art und Weise erzielbar sind, zeigen die Figuren 11 bis 13. Wie man bei vergleichender Betrachtung dieser Figuren erkennt, unterscheiden sie sich hinsichtlich der Richtung, in die die Steckverbindung zeigt, wobei dieser Unterschied allein durch unterschiedlich aufgesetzte Motorkappen bewirkt wird und ansonsten der Aufbau völlig identisch bleiben kann.

Wie besonders gut in den Darstellungen gemäß Figur 2 und 3 zu erkennen ist, ist die Motorkappe 81 mit dem Elektromotor 40 bzw. dessen Gehäuse verbunden -z.B. an diesen angefügt, was beispielsweise durch eine Steckverbindung erreicht werden kann-, so dass Motorkappe und Elektromotor eine Motorbaugruppe 110 bilden, die weiter unten anhand der Figuren 5 und 6 noch näher erläutert wird.

Das der Motorkappe 81 gegenüber liegende Ende des Motortubus 80 ist an einem weiteren Gehäuseteil 90 festgelegt, wobei dieses weitere Gehäuseteil 90 als Aufnahme für eine Getriebeeinheit 50 vorgesehen ist und deshalb im Folgenden als Getriebeträgertopf 90 bezeichnet wird. Der Boden 92 dieses Getriebeträgertopfes 90 verfügt über eine erste Ausnehmung 94, durch welche die erwähnte Motorwelle 42 samt Motorritzel 43 ragt. Primär sind Getriebeträgertopf 90 und Motortubus 80 einstückig ausgebildet. Mehrstückige, nachträglich verbundene Ausführungsformen sind aber auch denkbar. Das Festlegen des Motortubus 80 an dem Getriebeträgertopf 90 kann dann, sofern der Getriebeträgertopf 90 ebenfalls aus Kunststoff besteht, beispielsweise durch Laserschweißen oder Verkleben erfolgen. Andere Verbindungsmöglichkeiten sind ebenfalls denkbar.

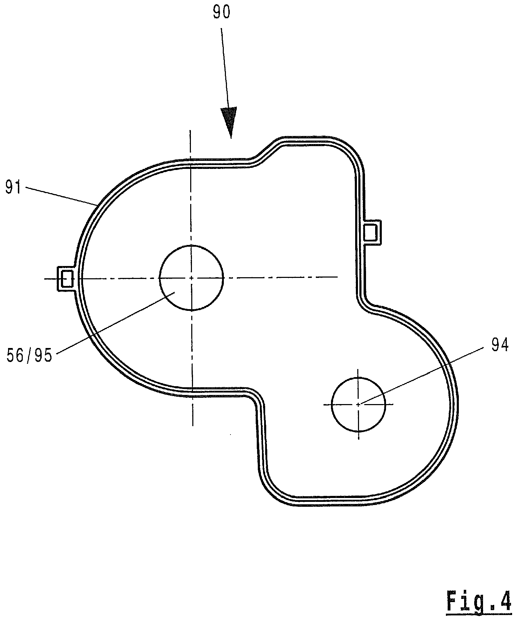

Der Getriebeträgertopf 90 weist am Boden 92 in zum Elektromotor 40 abgewandter Richtung eine umlaufende Wand 91 auf, sodass sich insgesamt eine Topfform des Getriebeträgertopfes 90 ergibt. Zwischen der Wandung 91 liegen weitere Getriebeelemente der Getriebeeinheit. Eine Draufsicht von oben in die topfartige Vertiefung des Getriebeträgertopfes 90 zeigt Figur 4. Dort ist auch die bereits erwähnte erste Ausnehmung 94 zu erkennen, durch welche die Motorwelle 42 samt Motorritzel 43 geführt wird. Diese Ausgangswelle 56 der Getriebeeinheit 50 steht dann, wie bereits erläutert, mit der Drehspindel 22 der Bremsbelagverstelleinheit 20 drehfest in Verbindung, um die Verlagerung des Kolbens 24 für die Verstellung des Bremssattels zu bewirken.

Wie Figur 1 zeigt, ist der Getriebeträgertopf 90 mit Ausnahme der Stelle, an der der Motortubus 80 angefügt ist, nach oben hin von einen Gehäusedeckel 93 abgeschlossen, welche gemeinsam mit dem Getriebeträgertopf Teile der Getriebeeinheit aufnehmen.

Wie die bisher erläuterte Darstellungen in Figur 1 zeigt, sind die Achsen der Motorwelle 42 und der Ausgangswelle 56 parallel zueinander ausgerichtet, wobei der Motortubus 80 mit dem darin angeordneten Elektromotor 40 in unmittelbarer Nachbarschaft und axial parallel zu der Bremsbelagverstelleinheit 20 ausgerichtet ist.

In der als Figur 1 dargestellten Ausführungsform ist das Befestigungsmittel 60 optional als spangenförmiges oder mindestens annähernd U-förmiges Einschiebeteil gestaltet. Dieses Einschiebeteil kann zum Beispiel ein metallisches Stanzteil sein, welches U-förmig in eine entsprechende, umlaufende Nut 99 am Außenumfang des Getriebeträgertopfes 90 eingreift.

Dabei verfügt dieses Befestigungsmittel 60 über eine oder mehrere Befestigungsöffnungen 63, durch welche entsprechende Befestigungsschrauben geführt werden können, um die Aktuatoranordnung 10 am Bremssattel 30 festzuschrauben.

Die Befestigungsöffnungen 63, von denen in den Figuren 1 bis 3 jeweils zwei vorgesehen sind, die aber grundsätzlich auch in anderer Anzahl vorgesehen werden können, befinden sich auf Befestigungslaschen 61, die randseitig aus dem Getriebeträgertopf 90 hervorstehen, wenn das spangenförmige Befestigungsmittel 60 in die Nut 99 am Außenumfang des Getriebeträgertopfes 90 eingeführt ist. Um das Befestigungsmittel 60 in oder am Getriebeträgertopf 90 festzulegen, kann an den Enden der beiden U-förmigen Schenkel des Befestigungsmittels 60 jeweils eine Bohrung 65 vorgesehen sein, die bei eingeschobenem Befestigungsmittel 60 mit entsprechenden Bohrungen 96 im Getriebeträgertopf 90 korrespondieren, so dass Bolzen oder Stifte durch diese Öffnungen 63, 96 geführt werden können, um das Befestigungsmittel 60 im Getriebeträgertopf 90 gegebenenfalls zusätzlich zu fixieren.

Um den Bedürfnissen von unterschiedlichen Einbauforderungen gerecht zu werden, kann durch das Bereitstellen von verschiedenen Befestigungsmitteln 60 eine hohe Variabilität hinsichtlich der Befestigungsmöglichkeiten geschaffen werden. Es ist dabei lediglich notwendig die erforderlichen Befestigungsöffnungen 63 und die zugehörenden Befestigungslaschen 61 an anderer Stelle zu platzieren. Zusätzlich ist es ebenfalls möglich, mehr als zwei Befestigungsöffnungen 63 an dem Befestigungsmittel 60 vorzusehen. Um den unterschiedlichen Befestigungsbedingungen Rechnung zu tragen ist es lediglich notwendig, ein entsprechend vorbereitetes anderes Befestigungsmittel 60 in die Nut 99 des Gehäuseträgertopfes 90 einzuführen und dort festzulegen.

Die Figuren 5 und 6 zeigen die Motorbaugruppe 110, die mindestens aus dem Elektromotor 40 mit Motorgehäuse 41, Motorwelle 42 und Motorritzel 43 einerseits und aus der Motorkappe 81 mit einstückig über die Kontaktführung 83 (in deren Inneren bevorzugt die nicht sichtbaren elektrischen Verbindungen verlaufen) angesetzter Steckeraufnahme 71.

In der dargestellten Ausführungsform verläuft die Kontaktführung 83 im Wesentlichen parallel zur Achse der Motorwelle 42 und ihr Endabschnitt 83a ist so abknickend geformt, dass die Steckeraufnahme 71 ungefähr auf Höhe des Motorritzels 43 angeordnet ist und in der Darstellung der Figuren 5 und 6 nach unten, in Richtung auf die Motorkappe 81 hin, geöffnet ist. Offensichtlich kann durch Variation des Abknickwinkels des Endabschnitts 83a der Kontaktführung 83 die Richtung, in die die Steckeraufnahme 71 geöffnet ist, ebenso variiert werden wie durch Variation der Verlaufsrichtung der Kontaktführung 83 der Abstand zum Motor und durch Variation der Länge der Kontaktführung 83 die Höhe, in der die Steckeraufnahme 71 angeordnet ist. Damit ergibt sich auf einfache Weise eine sehr einfache Möglichkeit zur Variation der Position der Steckeraufnahme 71. Um eine andere Nutzeranforderung bezüglich dieser Position zu erfüllen, muss an der gesamten Aktuatoranordnung 10 lediglich die Motorkappe 81 angepasst werden. Bereits ohne Anpassung der Motorkappe 81 mit Steckeraufnahme 71 und Kontaktführung 83 kann eine bloße Änderung des Winkels, unter dem die Steckeraufnahme 71 relativ zur Verbindungsachse zwischen Motorachse und Getriebe angeordnet ist, da dazu die Motorkappe 81 nur in einer anderen Orientierung, bei der die Steckeraufnahme 71 in die gewünschte Richtung zeigt, aufgesetzt werden muss.

Die Flexibilität, die durch diesen Aufbau erreicht werden kann, geht aber sogar noch weiter. Wie in Figur 5 besonders gut zu erkennen ist, kann auf der dem Elektromotor 40 zugewandten Seite der Motorkappe 81 nämlich zumindest ein Teil oder auch die gesamte Steuerelektronik 84 einschließlich der nicht zu erkennenden Kontakte für die Stromversorgung des Elektromotors 40 angeordnet werden. Dies ist insbesondere deshalb von Bedeutung, weil auch der Typ des Elektromotors 40 variiert werden kann. Beispielsweise könnte für einen anderen Abnehmer ein Elektromotor mit einem kleineren Durchmesser als der dargestellte Elektromotor 40 verwendet werden. Ein etwaiger Längenunterschied des Elektromotors 40 kann durch Variation der Dicke der Motorkappe 81 ausgeglichen werden. All diese Variationen erfordern lediglich eine Änderung an der Motorbaugruppe, und sind, da die Schnittstelle 85 zwischen Motorkappe 81 und Motortubus 80 standardisiert werden kann, zu demselben Aktuator-Gehäuse kompatibel.

Um die Motorbaugruppe 110 aus den in Figur 5 dargestellten Komponenten zur fertigen Baugruppe gemäß Figur 6 zusammenzusetzen, wird der Elektromotor 40, insbesondere dessen Motorgehäuse 41, mit der Motorkappe 81 gefügt, insbesondere blind gefügt. Die fertiggestellte Motorbaugruppe 110 kann dann, wie in den Figuren 1 bis 3, betrachtet in absteigender Nummerierung, ersichtlich, in den Motortubus 80 eingeführt werden um dann abschließend an diesem befestigt zu werden, was insbesondere durch Fügen der Motorkappe 81 an den Motortubus 80 erreicht werden kann.

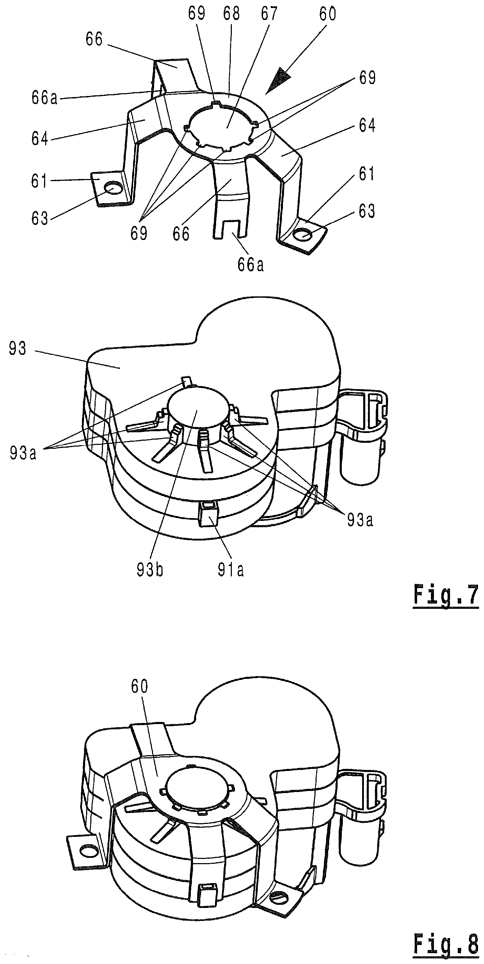

Eine andere Möglichkeit, die Aktuatoranordnung 10 an einer Bremsbelagverstelleinheit 20 zu befestigen, ist anhand der Figuren 7 und 8 gezeigt. Dort verfügt der Getriebeträgertopf 90 nicht über eine sich um beide Teile des Getriebeträgertopfes 90 herumlaufende Nut 99, in den das Befestigungsmittel 60 eingeschoben wird, sondern vielmehr, über ein Aufsteckteil bzw. einen Aufsteckkorb, welcher von oben her auf die Aktuatoranordnung 90 und insbesondere auf den Gehäusedeckel 93 drehfest aufgesetzt wird und mit vier Armen 64,66 den Getriebeträgertopf 90 umgreift. Das wiederum mit dem Bezugszeichen 60 markierte korbartige Befestigungsteil verfügt über eine mittige Öffnung 67, welche von einem ringförmigen Befestigungsteil 68 umrandet ist. Dieses ringförmige Befestigungsteil 68 weist an ihrer mittigen Öffnung 67 mehrere, vorliegend sieben Nuten 69 auf, die in entsprechend hervorspringende Nasen 93a am Gehäusedeckel 93 eingreifen können, so dass das Befestigungsteil 60 dort drehfest angeordnet werden kann. Durch die Öffnung 67 des Befestigungsteils 60 ragt eine entsprechend ausgebildeter Zapfen 93b des Gehäusedeckels 93.

Von dem ringförmigen Befestigungsteil 98 erstrecken sich insgesamt vier nach unten abgewinkelte Beine 66, 64 weg, die so ausgeführt und abgewinkelt sind, dass sie die Aktuatoranordnung 10, d. h. den Gehäusedeckel 93 sowie den Getriebeträgertopf 90 umgreifen können. Die beiden Beine 66 verfügen ebenfalls über Nuten 66a an ihrem Ende, welche in entsprechende hervorspringende Nasen 90a des Getriebeträgertopfes 90 greifen. Dadurch ist eine zusätzliche Verdrehfestigkeit sichergestellt. Die beiden anderen am Befestigungsteil 60 befindlichen Beine 64 sind an ihrem distalen Ende um etwa 90° nach außen abgewinkelt und verfügen dort über Befestigungslaschen 61, in welche wiederum Befestigungsöffnungen 63 eingearbeitet sind. Mit diese Befestigungsöffnungen 63 kann die gesamte Aktuatoranordnung 10 dann an der Bremsbelagverstelleinrichtung 20 festgeschraubt werden.

Es versteht sich, dass durch einfaches Verändern beispielsweise der Winkellage der Befestigungslaschen 64 andere Befestigungsbedingungen von Kunden für die Aktuatoranordnung 10 erfüllt werden können. Es müssen lediglich die Befestigungsbohrungen 63 mit den Beinen 64 an dem Befestigungsteil 60 versetzt werden. Durch einen einfachen Austausch dieses Befestigungsmittel 60 ist deshalb eine große Varianz der Befestigungsmöglichkeiten der im übrigen unveränderten Aktuatoranordnung 10 gewährleistet.

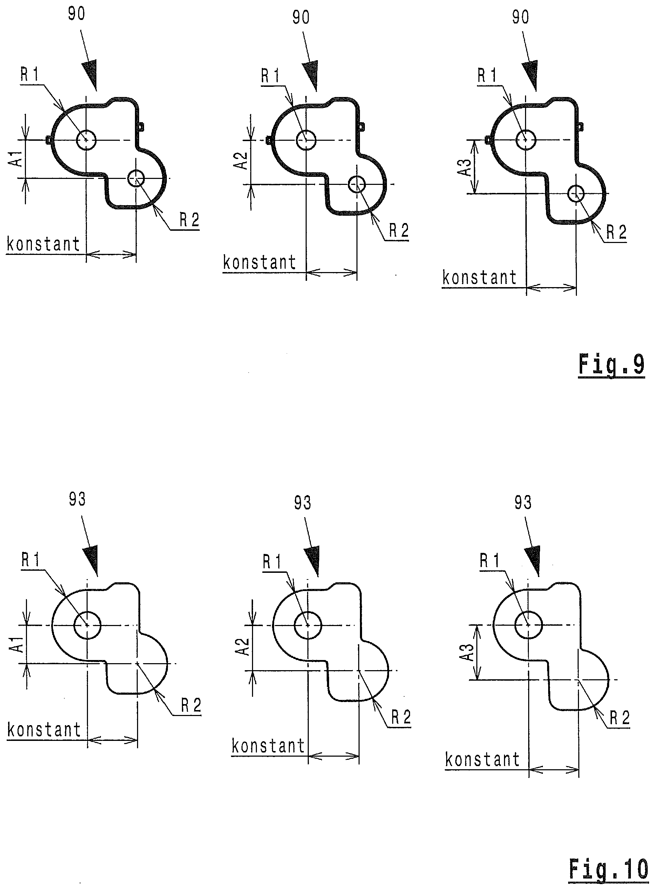

Im Zusammenhang mit den Figuren 9 und 10 wird die Vielfältigkeit der vorgeschlagenen Aktuatoranordnung nochmals dargestellt. In Figur 9 ist die Draufsicht von oben in das Innere des Getriebeträgertopfes 90 dargestellt. Dabei sind drei verschieden große Getriebeträgertöpfe 90 gezeigt, welche sich lediglich dadurch unterscheiden, dass die Achsabstände A1, A2, A3 zwischen den Ausnehmungen 94, 95 unterschiedlich groß sind. Die einzelnen Schnittstellen zum Befestigen des Elektromotors 40 bzw. des Motortubus 80, in dem der Elektromotor 40 platziert ist und die Schnittstelle für das spangenartige Befestigungsmittel 60 bleiben dagegen unverändert. Dies bedeutet, dass die in Figur 9 eingezeichneten Radien R1, R2 an den Getriebeträgertöpfen 90 weiterhin identisch sind, um das erwähnte Befestigungsmittel 60 und den Motortubus 80 daran zu befestigen bzw. anzuformen. Der Radius R1 entspricht mindestens annähernd dem Radius des U-förmigen bzw. spangenförmigen Befestigungsmittel 60 von Figur 2 und Figur 3, während der Radius R2 die Fügestelle zu der Motorkappe 81 definiert. In Figur 10 sind die zu den verschieden großen Getriebeträgertöpfen 90 von Figur 9 passenden Gehäusedeckels 93 dargestellt, die sich ebenfalls in ihrer Länge unterscheiden.

### Bezugszeichenliste

- 10: Aktuatoranordnung
- 20: Bremsbelagverstelleinheit
- 22: Drehspindel
- 24: Kolben
- 30: Bremssattel
- 40: Elektromotor
- 41: Motorgehäuse

- 43: Motorritzel
- 50: Getriebeeinheit
- 51: Getriebeelement
- 52: Getriebeelement, Spindel
- 53: Getriebeelement
- 54: Getriebeelement
- 56: Ausgangswelle

- 60: Befestigungsmittel
- 61: Befestigungslasche
- 63: Befestigungsöffnung
- 64: Beine
- 65: Bohrung
- 66: Beine
- 66a: Nuten
- 67: Öffnung
- 68: Ringförmiges Befestigungsteil
- 69: Nuten

- 71: Steckeraufnahme
- 72: Steckkontakte
- 80: Motortubus 20
- 81: Motorkappe
- 82: Boden
- 83: Kontaktführung
- 83a: Endabschnitt
- 84: Steuerelektronik
- 85: Schnittstelle

- 90: Gehäuse, Getriebeträgertopf
- 90a: Nasen
- 91: Wand
- 91a: Rastnase an Wand 91 des Gehäuses 90
- 92: Boden
- 93: Gehäusedeckel
- 93a: Rastnasen am Gehäusedeckel
- 93b: Zapfen
- 94: Ausnehmung
- 95: Ausnehmung
- 96: Bohrung
- 99: Nut

- 100: Bolzen
- 110: Motorbaugruppe

- A1: Achsabstand
- A2: Achsabstand
- A3: Achsabstand
- R1: Radius
- R2: Radius
- X: Längsachse

## Patentansprüche

1. Aktuatoreinrichtung für eine Bremse, insbesondere eine elektrische Parkbremse oder elektromechanische Betriebsbremse, mit einer von der Aktuaroranordnung (10) antreibbaren Bremsbelagverstelleinheit (20), wobei die Aktuatoranordnung (10) modular aufgebaut ist und folgende Merkmale aufweist:
- einen Elektromotor (40),
- eine in einem Gehäuse (90) sitzende Getriebeeinheit, die mit dem Elektromotor (40) gekoppelt ist und ausgangsseitig mit der Bremsbelagverstelleinheit (20) in Wirkverbindung steht,
- Befestigungsmittel (60) zum Befestigen der Aktuatoranordnung (10) am Bremssattel (30) oder der Bremsbelagverstelleinheit (20),
- eine Steckeraufnahme (71) für einen Anschlussstecker zur Übermittlung elektrischer Signale an den Elektromotor (40),
**gekennzeichnet durch**
folgende Merkmale:
- das Gehäuse (90) weist einen angeformten oder angefügten Motortubus (80), in den der Elektromotor (40) aufgenommen ist, und eine Motorkappe (81) auf,
- die Motorkappe (81) ist mit dem Elektromotor (40) gefügt und
- die Motorkappe (81) ist mit der Steckeraufnahme (71) für einen Anschlussstecker zur Übermittlung elektrischer Signale an den Elektromotor (40) einstückig über eine Kontaktführung (83) verbunden.

2. Aktuatoranordnung nach Anspruch 1,
**dadurch gekennzeichnet, dass** der Motortubus (80) und/oder die Motorkappe (81) aus Kunststoff sind.

3. Aktuatoranordnung nach Anspruch 1 oder 2,
**dadurch gekennzeichnet, dass** an der Motorkappe (81), insbesondere auf deren dem Elektromotor (40) zugewandten Seite, zumindest Teile der Steuerelektronik für den Elektromotor (40) angeordnet sind.

4. Aktuatoranordnung nach Anspruch 3,
**dadurch gekennzeichnet, dass** an der Motorkappe (81) alle elektronischen Komponenten des Elektromotors (40) angeordnet sind, so dass erst die Verbindung der Motorkappe (81) mit dem Motorgehäuse (80) den Elektromotor (40) zu einer funktionsfähigen Einheit macht.

5. Aktuatoranordnung nach einem der Ansprüche 1 bis 4,
**dadurch gekennzeichnet, dass** der Elektromotor (40) ein Motorgehäuse (41) aufweist und dass die Motorkappe (81) und das Motorgehäuse (41) feststehend aneinander gefügt sind, insbesondere durch eine Steckverbindung und dabei blindes Fügen der Motorkappe (81) zum Motorgehäuse (41).

6. Aktuatoranordnung nach einem der Ansprüche 1 bis 5,
**dadurch gekennzeichnet, dass** die Befestigungsmittel als separates Austauschteil ausgebildet, mit mindestens einer Befestigungsöffnung (63) versehen und verdrehfest an der Aktuatoranordnung festgelegt sind.

7. Aktuatoranordnung nach einem der Ansprüche 1 bis 6,
**dadurch gekennzeichnet, dass** die Getriebeeinheit (50) mit ihren Getriebeelementen (51 - 54) im Inneren eines ein Gehäuseteil des Gehäuses (90) bildenden Getriebeträgertopfes sitzt, welcher an seinem Boden (92) zwei Ausnehmungen (94, 95) aufweist, durch welche eine Motorwelle (42) des Elektromotors (40) sowie eine Ausgangswelle (56) der Getriebeeinheit (50) ragt und wobei der Getriebeträgertopf auf seiner den beiden Ausnehmungen (94, 95) gegenüberliegenden Seite von einem Gehäusedeckel (93) verschließbar ist.

8. Aktuatoranordnung nach einem der Ansprüche 1 bis 7,
**dadurch gekennzeichnet, dass** der Getriebeträgertopf aus Kunststoff besteht und einstückig mit dem den Elektromotor (40) aufnehmenden Motortubus (80) ausgeführt ist.

9. Aktuatoranordnung nach einem der Ansprüche 1 bis 8,
**dadurch gekennzeichnet, dass** die Befestigungsmittel (60) als metallisches Stanzteil oder Kunststoffteil ausgebildet sind.

10. Aktuatoranordnung nach einem der Ansprüche 1 bis 9,
**dadurch gekennzeichnet, dass** die Befestigungsmittel als Einschiebeteil ausgebildet sind, welche in eine Nut (90) des Getriebeträgerkopfes (90) einfügbar und dort verdrehfest festlegbar ist.

11. Aktuatoranordnung nach Anspruch 10,
**dadurch gekennzeichnet, dass** das Einschiebeteil spangenartig oder mindestens annähernd U-förmig gestaltet ist.

12. Aktuatoranordnung nach Anspruch 10 oder 11,
**dadurch gekennzeichnet, dass** das Einschiebeteil mittels Stiften oder Bolzen (10) mit dem Getriebeträgertopf (90) verbindbar ist.

13. Aktuatoranordnung nach einem der Ansprüche 1 bis 9,
**dadurch gekennzeichnet, dass** die Befestigungsmittel (60) als Aufsteckteil ausgebildet sind, welches auf der Aktuatoranordnung (10) drehfest aufsitzt.

14. Aktuatoranordnung nach Anspruch 13,
**dadurch gekennzeichnet, dass** das Aufsteckteil an Rastnasen (93a) des Getriebeträgertopfes (90)und/oder des Gehäusedeckels (93) der Aktuatoranordnung (10) festgelegt ist.

15. Aktuatoranordnung nach einem der Ansprüche 1 bis 14,
**dadurch gekennzeichnet, dass** der Getriebeträgertopf (90) und der Gehäusedeckel (93) jeweils in unterschiedlichen Größen vorgehalten werden, wobei die Schnittstelle zu dem Umgehäuse (80) des Elektromotors (40) immer rotationssymmetrisch mit identischem Durchmesser ausgebildet ist.

## Claims

1. An actuator arrangement for a brake, particularly an electrical parking brake or electromechanical service brake, having a brake pad adjustment device (20) which can be driven by the actuator arrangement (10), wherein the actuator arrangement (10) has a modular construction and the following features:
- an electric motor (40),
- a gear unit (90), positioned in a housing, which is coupled to the electric motor (40) and is operatively connected on the output side to the brake pad adjustment device (20),
- fastening means (60) for fastening the actuator arrangement (10) to the brake caliper (30) or the brake pad adjustment device (20),
- a plug receptacle (71) for a plug connector for transmitting electrical signals to the electric motor (40),
**characterised by** the following features:
- the housing (90) comprises a motor tube (80) which is moulded thereon or joined thereto and in which the electric motor (40) is housed, and a motor cap (81),
- the motor cap (81) is joined to the electric motor (40) and
- the motor cap (81) is integrally connected via a contact guide (83) to the plug receptacle (71) for a plug connector for transmitting electrical signals to the electric motor (40).

2. Actuator arrangement according to claim 1, **characterised in that** the motor tube (80) and/or the motor cap (81) are made from plastic.

3. Actuator arrangement according to claim 1, **characterised in that** at least parts of the control electronics for the electric motor (40) are arranged on the motor cap (81), in particular on the side thereof facing the electric motor (40).

4. Actuator arrangement according to claim 3, **characterised in that** all of the electronic components of the electric motor (40) are arranged on the motor cap (81), so that the electric motor (40) only becomes a functional unit when the motor cap (81) is connected to the motor housing (80).

5. Actuator arrangement according to one of claims 1 to 4, **characterised in that** the electric motor (40) has a motor housing (41), and **in that** the motor cap (81) and the motor housing (41) are fixedly joined to one another, in particular by a plug connection, and in this case by blind joining of the motor cap (81) to the motor housing (41).

6. Actuator arrangement according to one of claims 1 to 5, **characterised in that** the fastening means is designed as a separate replacement part, provided with at least one fastening opening (63) and fixed non-rotatably to the actuator arrangement.

7. Actuator arrangement according to one of claims 1 to 6, **characterised in that** the gear unit (50) with its gear elements (51 - 54) is situated in the interior of a gear carrier container which forms a housing part of the housing (90) and which has on its base (92) two recesses (94, 95) through which a motor shaft (42) of the electric motor (40) and also an output shaft (56) of the gear unit (50) project, wherein the gear carrier container can be closed on the side thereof which is opposite the two recesses (94, 95) by a housing cover (93).

8. Actuator arrangement according to one of claims 1 to 7, **characterised in that** the gear carrier container is made from plastic and is designed integrally with the motor tube (80) which houses the electric motor (40).

9. Actuator arrangement according to one of claims 1 to 8, **characterised in that** the fastening means (60) are designed as a stamped metal part or a plastic part.

10. Actuator arrangement according to one of claims 1 to 9, **characterised in that** the fastening means are designed as an insert part which can be inserted into a groove (90) of the gear carrier container (90) and can be fixed therein non-rotatably.

11. Actuator arrangement according to claim 10, **characterised in that** the insert part has a clasp-like or at least approximately U-shaped design.

12. Actuator arrangement according to claim 10 or 11, **characterised in that** the insert part can be connected to the gear carrier container (90) by means of pins or bolts (10).

13. Actuator arrangement according to one of claims 1 to 9, **characterised in that** the fastening means (60) are designed as a plug part which is seated non-rotatably on the actuator arrangement (10).

14. Actuator arrangement according to claim 13, **characterised in that** the plug part is fixed to latching lugs (93a) of the gear carrier container (90) and/or the housing cover (93) of the actuator arrangement (10).

15. Actuator arrangement according to one of claims 1 to 14, **characterised in that** the gear carrier container (90) and the housing cover (93) are each available in different sizes, wherein the interface to the housing (80) surrounding the electric motor (40) is always rotationally symmetrical and designed with the identical diameter.

## Revendications

1. Dispositif d'actionneur destiné à un frein, en particulier un frein de stationnement électrique ou un frein de service électromagnétique comprenant une unité de réglage des plaquettes de frein (20) pouvant être actionnée par le dispositif d'actionneur (10), le dispositif d'actionneur (10) étant modulaire et comprenant les éléments suivants :
- un moteur électrique (40),
- une unité de transmission située dans un carter (90), qui est couplée au moteur électrique (40) et est en liaison fonctionnelle avec l'unité de réglage des plaquettes de frein (20) côté sortie,
- des moyens de fixation (60) permettant de fixer le dispositif d'actionneur (10) sur l'étrier de frein (30) ou l'unité de réglage des plaquettes de frein (20),
- un logement de fiche (71) destiné à une fiche de connexion permettant de transmettre des signaux électriques au moteur électrique (40),
**caractérisé en ce que**
- le carter (90) comporte un tube de moteur (80) moulé ou joint dans lequel est logé le moteur électrique (40), et un capot de moteur (81),
- le capot du moteur (81) est assemblé avec le moteur électrique (40),
- le capot du moteur (81) est relié en une seule pièce par l'intermédiaire d'un conducteur de contact (83) avec le logement de fiche (71) destiné à une fiche de connexion permettant de transmettre des signaux électriques au moteur électrique (40).

2. Dispositif d'actionneur conforme à la revendication 1,
**caractérisé en ce que**
le tube du moteur (80) et/ou le capot du moteur (81) sont réalisés en matériau synthétique.

3. Dispositif d'actionneur conforme à la revendication 1 ou 2,
**caractérisé en ce qu'**
au moins des parties de l'électronique de commande du moteur électrique (40) sont montées sur le capot (81) du moteur, en particulier sur sa face tournée vers le moteur électrique (40).

4. Dispositif d'actionneur conforme à la revendication 3,
**caractérisé en ce que**
tous les composants électroniques du moteur électrique (40) sont montés sur le capot (81) de ce moteur, de sorte que la seule liaison du capot (81) du moteur avec le carter (90) du moteur permette de constituer le moteur électrique (40) en une unité apte au fonctionnement.

5. Dispositif d'actionneur conforme à l'une des revendications 1 à 4,
**caractérisé en ce que**
le moteur électrique (40) comporte un carter (41), et le capot (81) et le carter (41) du moteur sont solidairement assemblés l'un à l'autre, en particulier par une liaison par enfichage, et ainsi une jointure invisible du capot (81) avec le carter (41) du moteur.

6. Dispositif d'actionneur conforme à l'une des revendications 1 à 5,
**caractérisé en ce que**
les moyens de fixation sont réalisés sous la forme de pièces interchangeables séparées ayant au moins une ouverture de fixation (63) et fixées solidairement en rotation sur le dispositif d'actionneur.

7. Dispositif d'actionneur conforme à l'une des revendications 1 à 6,
**caractérisé en ce que**
l'unité de transmission (50) est située, avec ses éléments de transmission (51-54) à la partie interne d'un pot de support de transmission formant une partie du carter (90), qui comporte sur son fond (92) deux évidements (94, 95) au travers desquels dépassent l'arbre (42) du moteur électrique (40) ainsi que l'arbre de sortie (56) de l'unité de transmission, et le pot de support de la transmission peut être fermé sur sa face située à l'opposé des deux évidements (94, 95) par un capot de carter (93).

8. Dispositif d'actionneur conforme à l'une des revendications 1 à 7,
**caractérisé en ce que**
le pot de support de la transmission est en un matériau synthétique et est réalisé en une seule pièce avec le tube (80) recevant le moteur électrique (40).

9. Dispositif d'actionneur conforme à l'une des revendications 1 à 8,
**caractérisé en ce que**
les moyens de fixation (60) sont réalisés sous la forme de pièces métalliques estampées ou de pièces en matériau synthétique.

10. Dispositif d'actionneur conforme à l'une des revendications 1 à 9,
**caractérisé en ce que**
les moyens de fixation sont réalisés sous la forme d'une pièce coulissante qui peut être introduite dans une rainure (90) du pot de support de la transmission (90) et y être fixée sans liberté de rotation.

11. Dispositif d'actionneur conforme à la revendication 10,
**caractérisé en ce que**
la pièce coulissante est conformée sous forme d'agrafe ou au moins approximativement en forme de U.

12. Dispositif d'actionneur conforme à la revendication 10 ou 11,
**caractérisé en ce que**
la pièce coulissante peut être reliée au pot de support de la transmission (90) par l'intermédiaire de tiges ou de goujons (10).

13. Dispositif d'actionneur conforme à l'une des revendications 1 à 9,
**caractérisé en ce que**
les moyens de fixation (60) sont réalisés sous la forme d'une pièce d'enfichage qui s'applique sans liberté de rotation sur le dispositif d'actionneur (10).

14. Dispositif d'actionneur conforme à la revendication 13,
**caractérisé en ce que**
la pièce d'enfichage est fixée sur des becs d'encliquetage (93a) du pot de support de la transmission (90) et/ou du capot (93) du carter du dispositif d'actionneur (10).

15. Dispositif d'actionneur conforme à l'une des revendications 1 à 14,
**caractérisé en ce que**
le pot de support (90) de la transmission et le capot (93) du carter sont respectivement stockés en différentes dimensions et l'interface avec la périphérie du carter (80) du moteur électrique (40) est toujours symétrique en rotation avec un même diamètre.
